# EUROPEAN PATENT SPECIFICATION

(11) **EP 4 050 931 B1**
(45) Date of publication and mention of the grant of the patent: **25.12.2024**
(21) Application number: 20869715.1
(22) Date of filing: 03.09.2020
(51) Int. Cl.: H04W 24/08, H04L 65/1016, H04L 65/80, H04L 65/752, H04L 65/1083

(54) **MEDIA STREAM DELIVERY QUALITY NOTIFICATION METHOD AND SESSION BORDER CONTROLLER ENTITY**
VERFAHREN ZUR MELDUNG DER LIEFERQUALITÄT EINES MEDIENSTROMS UND SESSION BORDER CONTROLLER-EINHEIT
PROCÉDÉ DE NOTIFICATION DE QUALITÉ DE DISTRIBUTION DE FLUX MULTIMÉDIA ET ENTITÉ CONTRÔLEUR DE LIMITE DE SESSION

(30) Priority: 27.09.2019 CN 201910926779
(43) Date of publication of application: 31.08.2022
(73) Proprietor: ZTE Corporation, Shenzhen, Guangdong 518057 (CN)
(72) Inventor: ZHANG, Lu, Shenzhen, Guangdong 518057 (CN); WANG, Mengxiao, Shenzhen, Guangdong 518057 (CN); LI, Aijun, Shenzhen, Guangdong 518057 (CN); PAN, Hongbing, Shenzhen, Guangdong 518057 (CN); LI, Guanjun, Shenzhen, Guangdong 518057 (CN); ZENG, Deyong, Shenzhen, Guangdong 518057 (CN); LIU, Qin, Shenzhen, Guangdong 518057 (CN)
(74) Representative: Ipsilon
(86) International application number: PCT/CN2020/113150
(87) International publication number: WO 2021/057425

(56) References cited:
- WO-A1-2012/116881
- CN-A- 103 138 874
- CN-A- 104 853 138
- CN-A- 105 516 640
- CN-A- 110 086 746
- US-A1- 2011 222 403
- US-A1- 2012 263 144

## Description

### Field of the Invention

The present disclosure relates to, but is not limited to, the technical field of communication.

### Background of the Invention

The IP multimedia subsystem (which is referred to as IMS for short) is a subsystem which supports IP (internet protocol) multimedia services put forward in the third generation partnership project (which is referred to as 3GPP for short). Significant feature of the IMS is that it adopts the session initial protocol (which is referred to as SIP for short) system, which makes communication independent of the accessing manner, and provides, for various multimedia services, multiple capabilities, such as separation of a control function and a bearing capability, separation of call and session, separation of application and service, separation of service and network, and a combination of mobile network and Internet services.

With the starting of the 5G network construction, a terminal may be accessed through various manners, such as the wireless local area network, the 4G network, and the 5G network. However, since wireless network signal coverage is different, when the terminal performs network switching or is in a scene of poor wireless signals, the terminal cannot send a media stream delivery quality report, so that an opposite terminal cannot know the media stream delivery quality in time.

United States patent application WO2012116881A1 provides a method, apparatus and related computer program for managing sessions. The method includes: sending a signaling message in an ongoing session, determining if a response to the signaling message is received within a first predefined time period from sending the signaling message, and modifying the ongoing session if the result of the determination is negative.

United States patent application US2012263144A1 provides methods and systems for efficient handover of a media session between heterogeneous IP networks. A mobile device with Internet access can operate a software program to communicate with a corresponding node. The corresponding node may access the Internet through either (i) a NAT router or (ii) a public IP address. The mobile device establishes a media session with a corresponding node via the transmission of a first media stream and receipt of a second media stream, and a media control channel can optionally be implemented. The mobile device can acquire Internet access through a second IP address, and packets routed between the second IP address and the Internet may traverse a NAT router. A software routine can determine that handover of the media session from the first IP address to the second IP address is preferred.

### Summary of the Invention

The present disclosure is defined in the appended claims. The dependent claims set out particular embodiments.

According to a first aspect, an embodiment of the disclosure provides a media stream delivery quality notification method according to claim 1.

According to a second aspect, an embodiment of the disclosure provides a session border controller entity according to claim 9.

According to a third aspect, an embodiment of the disclosure provides a computer readable medium, which stores a computer program thereon according to claim 10. Herein, the program, when executed by the processor, implements steps of any of media stream delivery quality notification methods described herein.

### Brief Description of the Drawings

Fig. 1 is a flowchart of a media stream delivery quality notification method according to an embodiment of the disclosure;
Fig. 2 is a flowchart of another media stream delivery quality notification method according to an embodiment of the disclosure;
Fig. 3 is a flowchart of another media stream delivery quality notification method according to an embodiment of the disclosure;
Fig. 4 is an alternative implementation flowchart of step S 101 according to an embodiment of the disclosure;
Fig. 5 is an alternative implementation flowchart of step S 102 according to an embodiment of the disclosure;
Fig. 6 is a signaling diagram of another media stream delivery quality notification method according to an embodiment of the disclosure; and
Fig. 7 is a signaling diagram of another media stream delivery quality notification method according to an embodiment of the disclosure.

### Detailed Description of the Embodiments

In order to enable those skilled in the art to better understand solutions of the disclosure, media stream delivery quality notification methods provided in the disclosure are described in detail below with reference to the accompanying drawings.

Exemplary embodiments will be described more sufficiently hereinafter, but the exemplary embodiments may be embodied in different forms and shall not be explained as being limited to embodiments described herein. On the contrary, these embodiments are provided for making the disclosure clear and complete and for making those skilled in the art fully understand the scope of the disclosure.

Terms used herein are only used to describe specific embodiments, and are not intended to limit the disclosure. As used herein, singular forms such as "a/an" and "this" are also intended to include plural forms, unless otherwise clearly indicated in the context. It should also be understood that, when wordings, such as "include" and/or "is made up of', are used in the description, it is indicated that the feature, entirety, step, operation, element and/or component are/is present, without excluding a case that one or more other features, entireties, steps, operations, elements components and/or combinations thereof are present or added.

It should be understood that, although wordings such as first and second may be used to describe various elements, these elements shall not be limited by these wordings. These wordings are only used to distinguish one element from another element. Therefore, without departing from teaching of the disclosure, a first element, a first component, or a first module discussed in the following text may also be referred to as a second element, a second component, or a second module.

Unless otherwise limited, meanings of all terms (including technological and scientific terms) used herein are the same as meanings that are usually understood by a person of ordinary skills in the art. It should also be understood that, terms such as those defined in commonly used dictionaries shall be explained as having meanings that are consistent with meanings in relevant technologies and the background of the disclosure, and shall not be explained as having idealized or excessive meanings, unless clearly defined so herein.

The media stream delivery quality notification method provided in the disclosure may be used to detect a network state of a terminal in real time and send notification information to an opposite communication terminal thereof when the terminal cannot send a media stream delivery quality report in real time.

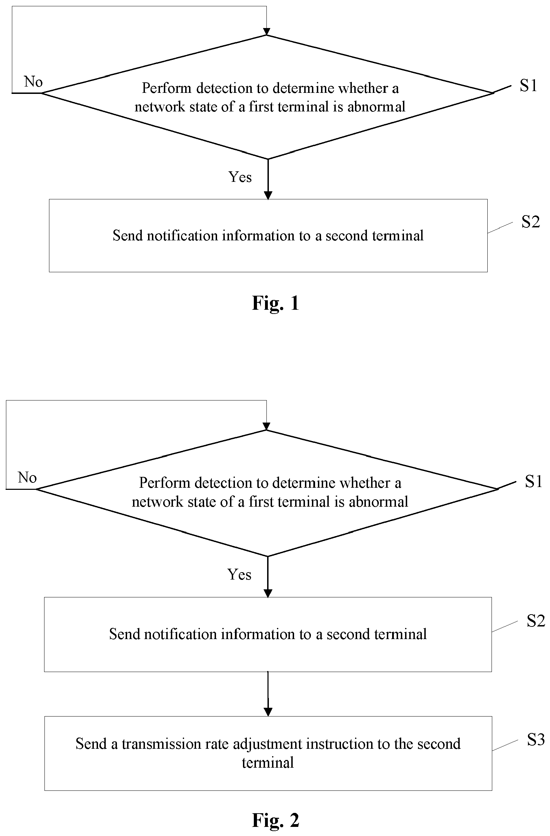

Fig. 1 is a flowchart of a media stream delivery quality notification method according to an embodiment of the disclosure. As shown in Fig. 1, the method may include steps S 1 and S2.

At step S 1, detection is performed to determine whether a network state of a first terminal is abnormal.

Herein, by performing detection to determine whether a state of a current access network of the first terminal is abnormal, whether the first terminal may normally send a media stream delivery quality report to the second terminal may be determined. Specifically, when it is detected that the state of the current access network of the first terminal is abnormal, it may be determined that the first terminal cannot normally send the media stream delivery quality report to the second terminal.

In actual application, a media stream delivery monitoring function is added in a session border controller entity (which is referred to as SBC for short) of the IP multimedia subsystem, so as to realize monitoring of the network state of the first terminal and a real-time media stream sent by the first terminal.

It should be noted that, terminals which participate in a communication process may all be real terminals, for example, mobile phones, IP phones, and IP video terminals; and one of the terminals may also be a network device, for example, an application server, an interworking device (for example, a media gateway control function entity and a media gateway), and so on, as long as it is ensured that one of parties participating in the communication process passes through the session border controller entity.

When it is detected, at step S1, that the network state of the first terminal is abnormal, the process proceeds to step S2; or when it is detected that the network state of the first terminal is not abnormal, a detecting function is activated continuously and the process continues to repeat step S1.

At step S2, notification information is sent to a second terminal.

Herein, the second terminal is an opposite communication terminal of the first terminal. The notification information corresponds to the media stream delivery quality report sent by the first terminal, so as to realize notifying of media stream delivery quality to the second terminal from a network side.

In actual application, a media stream delivery quality notifying function is added in the session border controller entity, so as to realize notifying of the media stream delivery quality to the second terminal. Based on this, the notification information may be sent to the second terminal by using the real-time transport control protocol (which is referred to as RTCP for short). This sending process is based on an address of an initial session. That is, sending is performed based on an IP address and a port number in the initial session. The second terminal parses the notification message and outputs the notification message to a user of the second terminal, so as to play a notifying role.

The embodiment provides a media stream delivery quality notification method, which may be used to monitor a network state of a first terminal in real time and send notification information to an opposite communication terminal thereof by taking the place of the terminal when the network state of the first terminal is abnormal and the terminal cannot perform notifying of the media stream delivery quality.

Fig. 2 is a flowchart of another media stream delivery quality notification method according to an embodiment of the disclosure. As shown in Fig. 2, the method also includes step S3 in addition to steps S1 and S2. Herein, after it is detected, at step S1, that the network state of the first terminal is abnormal, the process proceeds to step S3. Only step S3 is described in detail below.

At step S3, a transmission rate adjustment instruction is sent to the second terminal.

Herein, the transmission rate adjustment instruction is sent to the second terminal, so that the second terminal adjusts a media stream transmission rate by adjusting a sampling frequency, coding and decoding, and the like.

In actual application, the transmission rate adjustment instruction may be send to the second terminal by using the real-time transport control protocol or the real-time transport protocol (which is referred to as RTP for short). This sending process is also based on the address of the initial session. That is, the second terminal parses and sends the transmission rate adjustment instruction to a corresponding application media stream processing module, which initiates adjustment on the media stream transmission rate at a side of the second terminal.

It should be noted that, the solution of the disclosure does not limit an order for performing steps S2 and S3. That is, performing step S2 before step S3, performing step S3 before step S2, and performing steps S2 and S3 at the same time all fall into the protection scope of the disclosure.

The disclosure provides a media stream delivery quality notification method, which may be used to send a transmission rate adjustment instruction to an opposite communication terminal of a terminal when it is detected that a network state of the terminal is abnormal, so that the opposite terminal adjusts a media stream transmission rate.

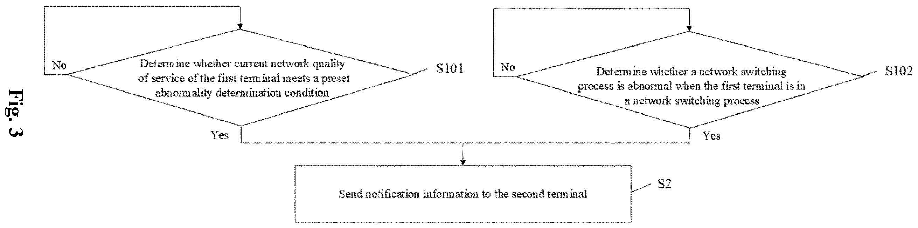

Fig. 3 is a flowchart of another media stream delivery quality notification method according to an embodiment of the disclosure. As shown in Fig. 3, this method is an alternative embodiment based on the method shown in Fig. 1. Specifically, step S1 includes steps S101 and S102.

At step S101, determining whether current network quality of service of the first terminal meets a preset abnormality determination condition is performed.

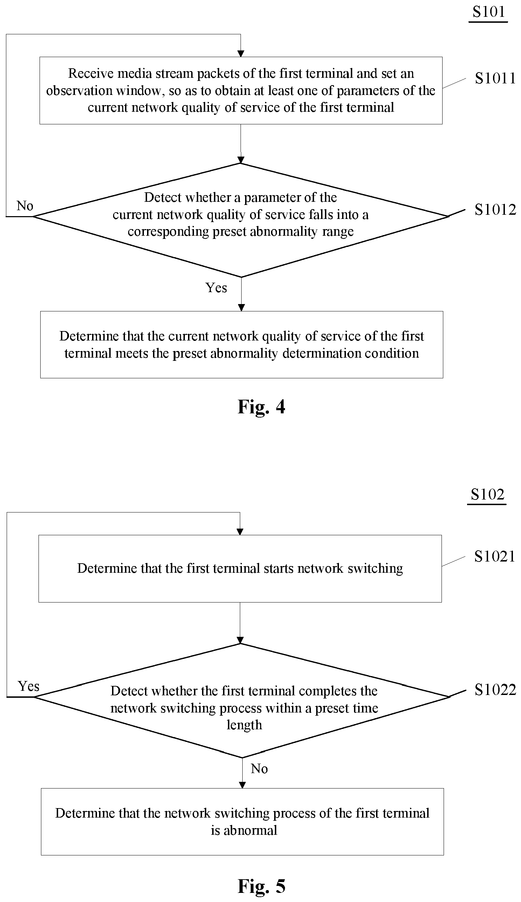

Fig. 4 is an alternative implementation flowchart of step S101 according to an embodiment of the disclosure. As shown in Fig. 4, step S101 may include steps S1011 and S1012.

At step S1011, media stream packets of the first terminal is received, and an observation window is set, so as to obtain at least one of parameters of the current network quality of service of the first terminal.

In some embodiments, the at least one of parameters of the current network quality of service includes at least one of packet loss rate, time delay, and jitter.

In actual application, the observation window is set, and media stream quality calculation is started, so as to obtain at least one of the parameters of the current network quality of service (which is referred to as QoS for short) of the first terminal. For example, the time delay between packets, the number of lost packets, and so on are calculated.

At step S1012, detecting whether a parameter of the current network quality of service falls into a corresponding preset abnormality range is performed.

In actual application, before the observation window expires, detecting whether the parameter of the current network quality of service falls into the corresponding preset abnormality range is performed. For example, whether the packet loss rate exceeds 50%, whether the time delay exceeds 80 ms, and so on are detected.

At step S1012, when it is detected that the parameter of the current network quality of service falls into the corresponding preset abnormality range, it is determined that the current network quality of service of the first terminal meets the preset abnormality determination condition; and when it is detected that the parameter of the current network quality of service does not fall into the corresponding preset abnormality range, it is determined that the current network quality of service of the first terminal does not meet the preset abnormality determination condition.

When it is determined, at step S101, that the current network quality of service of the first terminal meets the abnormality determination condition, it is detected that the network state of the first terminal is abnormal, and step S2 is performed subsequently based on this detection result; or when it is determined that the current network quality of service of the first terminal does not meet the abnormality determination condition, a determining function is activated continuously, and the process continues to repeat step S101.

In some embodiment, when it is determined that the current network quality of service of the first terminal meets the abnormality determination condition, the notification information sent to the second terminal through step S2 subsequently includes network quality abnormality notification information.

In actual application, the network quality abnormality notification information may be played to the second terminal by using a prompt tone, so as to prompt a change in the media stream delivery quality, and the sending process may be based on the real-time transport protocol.

At step S102, determining whether a network switching process is abnormal may be performed when the first terminal is in a network switching process.

Fig. 5 is an alternative implementation flowchart of step S102 according to an embodiment of the disclosure. As shown in Fig. 5, step S102 may include steps S1021 and S1022.

At step S1021, determining that the first terminal starts network switching is performed.

In actual application, a network switching monitoring function is added to the session border controller entity, so as to realize monitoring of the network switching process of the first terminal. Specifically, in response to the first terminal sending a network switching notification to the session border controller entity, or in response to a policy and charging rules function entity (which is referred to as PCRF for short) sending a bearer releasing notification which indicates releasing of a bearer of the first terminal in an access network to the session border controller entity, step S1021 is performed now, so as to determine that the first terminal starts network switching.

At step S 1022, detecting whether the first terminal completes a network switching process within a preset time length is performed.

In actual application, the preset time length may be set by setting a timer, and different preset time periods may be set by using different timers according to the application scenes.

At step S1022, when it is detected that the first terminal does not complete the network switching process within the preset time length, it is determined that the network switching process of the first terminal is abnormal; or when it is detected that the first terminal completes the network switching process within the preset time length, it is determined that the network switching process of the first terminal is not abnormal.

At step S102, when it is determined that the network switching process is abnormal, it is detected that the network state of the first terminal is abnormal, and step S2 is performed subsequently based on the detection result; or when it is determined that the network switching process is not abnormal, a determining function is activated continuously, and when the first terminal is in the network switching process, the process continues to repeat step S102.

In some embodiments, when it is determined that the network switching process is abnormal, the notification information sent to the second terminal through step S2 subsequently includes network switching abnormality notification information.

In actual application, a real-time media stream inserting function is added to the session border controller entity, so that the notification information sent to the second terminal can be sent in the form of a media stream. Based on this, the network switching abnormality notification information may be played to the second terminal by using a prompt tone, so as to prompt the first terminal being performing network switching, and the sending process may be based on the real-time transport protocol.

In some embodiments, the notification information further includes a source identification.

Herein, the notification information includes a source identification different from a corresponding source identification of the first terminal. The source identification is a media stream identification, and notifies the second terminal of the media stream being sent by the session border controller entity rather than by the first terminal.

In actual application, when the notification information is sent and a synchronization source (which is referred to as SSRC for short) identification is set, a value different from that of the first terminal is used as the source identification. Meanwhile, to highlight the difference, a sequence number of the notification information is renumbered, so that the notification information is different from the media stream delivery quality report sent by the first terminal.

It should be noted that, the solution of the disclosure does not limit an order for performing steps S101 and S102. That is, performing step S101 before step S102, performing step S 102 before step S101, and performing steps S 101 and S102 at the same time all fall into the protection scope of the disclosure.

It is certain that the method shown in Fig. 3 may also include step S3 in Fig. 2.

The embodiment of the disclosure provides a media stream delivery quality notification method, which can be used to determine whether current network quality of service of a terminal meets an abnormality determination condition and determine whether a network switching process of a first terminal is abnormal when the first terminal is in the network switching process, send corresponding notification information to an opposite communication terminal thereof based on determination results, and distinguish from the terminal by using a different source identification in the notification information.

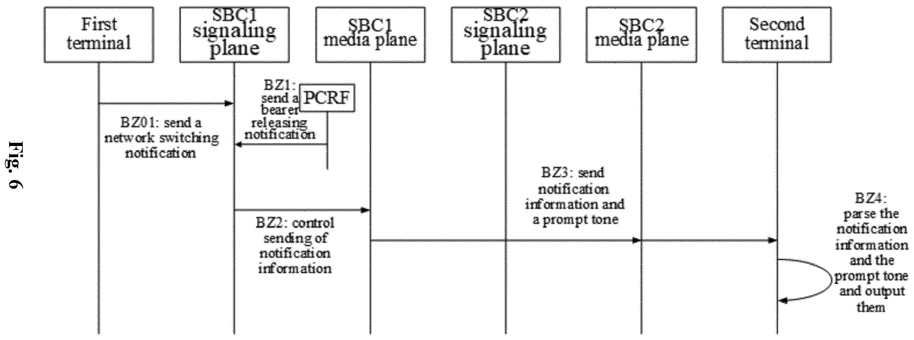

Fig. 6 is a signaling diagram of another media stream delivery quality notification method according to an embodiment of the disclosure. As shown in Fig. 6, a first terminal and a second terminal are both real terminals that can perform communication and have established a communication relationship, and this method may include step BZ01 and steps BZ1 to BZ4.

At step BZ01, the first terminal sends a network switching notification to a corresponding first session border controller entity (SBC1) signaling plane.

At step BZ1, the policy and charging rules function entity (PCRF) sends a bearer releasing notification to the first session border controller entity (SBC1) signaling plane, to indicate releasing of a bearer of the first terminal in a current network, for example, a 4G network. Herein, one of steps BZ1 and BZ01 may be chosen and performed in actual application.

At step BZ2, the first session border controller entity (SBC1) signaling plane controls a first session border controller entity (SBC1) media plane to send notification information to the second terminal.

At step BZ3, the first session border controller entity (SBC1) media plane sends the notification information and a prompt tone to the second terminal via a second session border controller entity (SBC2) media plane. Herein, sending of the notification information is based on the real-time transport control protocol, and sending of the prompt tone is based on the real-time transport protocol.

At step BZ4, the second terminal parses and outputs the notification information and the prompt tone to the user.

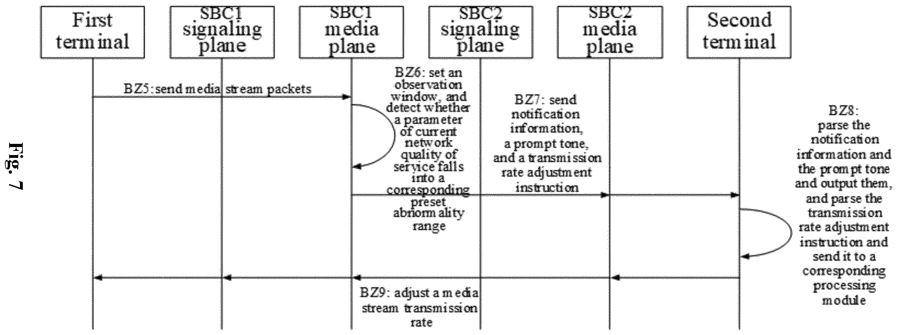

Fig. 7 is a signaling diagram of another media stream delivery quality notification method according to an embodiment of the disclosure. Herein, a first terminal and a second terminal are both real terminals that can perform communication and have established a communication relationship. As shown in Fig. 7, this method may include steps BZ5 to BZ9.

At step BZ5, the first terminal sends media stream packets to a first session border controller entity (SBC1) media plane. Herein, this step starts from establishing of a communication relationship between the first terminal and the second terminal.

At step BZ6, the first session border controller entity (SBC1) media plane sets an observation window, and detects whether a parameter of current network quality of service of the first terminal falls into a corresponding preset abnormality range.

At step BZ7, the first session border controller entity (SBC1) media plane sends notification information, a prompt tone, and a transmission rate adjustment instruction to the second terminal via a second session border controller entity (SBC2) media plane. Herein, sending of the notification information and sending of the transmission rate adjustment instruction are based on the real-time transport control protocol, and sending of the prompt tone is based on the real-time transport protocol.

At step BZ8, the second terminal parses and outputs the notification information and the prompt tone to the user; and the second terminal parses and sends the transmission rate adjustment instruction to a corresponding application media stream processing module in the interior.

At step BZ9, the application media stream processing module of the second terminal adjusts a media stream transmission rate by adjusting a sampling frequency, coding and decoding, and so on according to the transmission rate adjustment instruction. This adjustment process is based on the real-time transport control protocol, and interaction of the adjustment process is completed through the second session border controller entity (SBC2) media plane, the first session border controller entity (SBC1) media plane, a first session border controller entity (SBC1) signaling plane, and the first terminal.

An embodiment of the disclosure provides a session border controller entity, including: one or more processors; and a storage device, which is configured to store one or more programs. When the one or more programs are executed by the one or more processors, the one or more processors are enabled to implement any of media stream delivery quality notification methods described in the above embodiments.

An embodiment of the disclosure provides a computer readable medium, which stores a computer program thereon. Herein, the program, when executed by the processor, implements steps of any of media stream delivery quality notification methods described in the above embodiments.

A person of ordinary skills in the art may understand that, all or some steps of the method and functional modules/units of the device disclosed above may be implemented as software, firmware, hardware, and a proper combination thereof. In an embodiment of the hardware, a division of the functional modules/units mentioned in the above description does not necessarily correspond to a division of physical components. For example, one physical component may have multiple functions, or one function or step may be implemented by multiple physical components cooperatively. Some physical components or all physical components may be implemented as software executed by a processor, such as a central processor, a digital signal processor or a microprocessor, or may be implemented as hardware, or may be implemented as an integrated circuit, such as an application-specific integrated circuit. Such software may be distributed on a computer readable medium, and the computer readable medium may include a computer storage medium (or non-transient medium) and a communication medium (or transient medium). As is known to a person of ordinary skills in the art, the term of computer storage medium includes volatile and non-volatile, removable and non-removable mediums that are implemented in any method or technology for storing information (such as a computer readable instruction, a data structure, and a program module or other data). The computer storage medium includes, but is not limited to, an RAM, an ROM, an EEPROM, a flash memory or other memory technology, a CD-ROM, a digital versatile disc (DVD) or other optical disk storage, a magnetic cassette, a magnetic tape, a magnetic disk storage or other magnetic storage device, or any other medium which can be used to store the desired information and can be accessed by a computer. Besides, the communication medium usually includes a computer readable instruction, a data structure, a program module, or other data in a modulated data signal, such as a carrier wave or other transport mechanisms, and may include any information delivery medium.

Exemplary embodiments have been disclosed, and although specific terms are used, they are only used as and explained as general descriptive meanings, and are not used for limitation. In some embodiments, it is obvious for those skilled in the art that, unless otherwise clearly indicated, features, characteristics, and/or elements described in specific embodiments may be used alone, or may be used in combination with features, characteristics, and/or elements described in other embodiments. The invention is defined by the appended claims.

### Industrial Applicability

A media stream delivery quality notification method and a session border controller entity and a computer readable medium for implementing the method are provided in embodiments of the disclosure. This method can realize detecting of a network problem when an access network of a terminal is temporarily not available and sending of notification information to an opposite communication terminal thereof by taking the place of the terminal, so as to improve the timeliness of performing notifying of media stream delivery quality and meanwhile ensure the preciseness of communication quality sensed by the opposite communication terminal.

## Claims

1. A media stream delivery quality notification method, **characterized by** comprising:
performing, by a session border controller entity, SBC, detection to determine whether a network state of a first terminal is abnormal, wherein the network state comprises at least one of current network quality of service and abnormality or not of a network switching process (S1); and
sending, by the session border controller entity, SBC, if it is detected that the network state of the first terminal is abnormal, notification information corresponding to a media stream delivery quality report of the first terminal, to a second terminal, the second terminal being an opposite communication terminal of the first terminal (S2).

2. The media stream delivery quality notification method according to claim 1, wherein when it is detected by the session border controller entity, SBC, that the network state of the first terminal is abnormal, the method further comprises:
sending, by the session border controller entity, SBC, a transmission rate adjustment instruction to the second terminal (S3).

3. The media stream delivery quality notification method according to claim 1 or 2, wherein performing, by the session border controller entity, SBC, detection to determine whether the network state of the first terminal is abnormal comprises steps of:
determining whether the current network quality of service of the first terminal meets a preset abnormality determination condition (S101) and determining whether the network switching process is abnormal when the first terminal is in the network switching process (S102);
when it is determined that the current network quality of service of the first terminal meets the abnormality determination condition, it is detected that the network state of the first terminal is abnormal; and
when it is determined that the network switching process is abnormal, it is detected that the network state of the first terminal is abnormal.

4. The media stream delivery quality notification method according to claim 3, wherein:
when it is determined that the current network quality of service of the first terminal meets the abnormality determination condition, the notification information sent by the session border controller entity, SBC, to the second terminal comprises network quality abnormality notification information; and
when it is determined that the network switching process is abnormal, the notification information sent by the session border controller entity, SBC, to the second terminal comprises network switching abnormality notification information.

5. The media stream delivery quality notification method according to any one of claims 1 to 4, wherein the notification information further comprises a source identification.

6. The media stream delivery quality notification method according to any one of claims 3 to 5, wherein determining, by the session border controller entity, SBC, whether the current network quality of service of the first terminal meets the preset abnormality determination condition comprises steps of:
receiving media stream packets of the first terminal and setting an observation window, so as to obtain at least one of parameters of the current network quality of service of the first terminal (S1011);
detecting whether a parameter of the current network quality of service falls into a corresponding preset abnormality range (S1012);
determining that the current network quality of service of the first terminal meets the preset abnormality determination condition when it is detected that the parameter of the current network quality of service falls into the corresponding preset abnormality range.

7. The media stream delivery quality notification method according to claim 6, wherein the at least one of parameters of the current network quality of service comprises at least one of packet loss rate, time delay, and jitter.

8. The media stream delivery quality notification method according to any one of claims 3 to 5, wherein determining, by the session border controller entity, SBC, whether the network switching process is abnormal when the first terminal is in the network switching process comprises steps of:
determining that the first terminal starts network switching (S1021);
detecting whether the first terminal completes the network switching process within a preset time length (S1022); and
determining that the network switching process is abnormal when it is detected that the first terminal does not complete the network switching process within the preset time length.

9. A session border controller entity, **characterized by** comprising:
one or more processors; and
a storage device, which is configured to store one or more programs,
wherein when the one or more programs are executed by the one or more processors, the one or more processors are enabled to implement the media stream delivery quality notification method according to any of claims 1 to 8.

10. A computer readable medium, which stores a computer program thereon, **characterized in that** the program, when executed by the processor, implements steps of the media stream delivery quality notification method according to any of claims 1 to 8.

## Patentansprüche

1. Medienstromübermittlungsqualität-Benachrichtigungsverfahren, **dadurch gekennzeichnet, dass** es Folgendes umfasst:
Durchführen, durch eine Entität eines Session Border Controllers, SBC, einer Erfassung, um zu bestimmen, ob ein Netzzustand eines ersten Endgeräts anormal ist, wobei der Netzzustand mindestens eines von aktueller Netzdienstqualität und Anomalität oder nicht eines Netzvermittlungsprozesses (S1) umfasst; und
Senden, durch die Entität des Session Border Controllers, SBC, von Benachrichtigungsinformationen, die einem Medienstromübermittlungsqualität-Bericht des ersten Endgeräts entsprechen, an ein zweites Endgerät, wobei das zweite Endgerät ein gegenüberliegendes Kommunikationsendgerät des ersten Endgeräts (S2) ist, wenn erfasst wird, dass der Netzzustand des ersten Endgeräts anormal ist.

2. Medienstromübermittlungsqualität-Benachrichtigungsverfahren nach Anspruch 1, wobei, wenn von der Entität des Session Border Controllers, SBC, erfasst wird, dass der Netzzustand des ersten Endgeräts anormal ist, das Verfahren ferner Folgendes umfasst:
Senden, durch die Entität des Session Border Controllers, SBC, einer Übertragungsraten-Anpassungsanweisung an das zweite Endgerät (S3).

3. Medienstromübermittlungsqualität-Benachrichtigungsverfahren nach Anspruch 1 oder 2, wobei ein Durchführen, durch die Entität des Session Border Controllers, SBC, einer Erfassung, um zu bestimmen, ob der Netzzustand des ersten Endgerätes anormal ist, folgende Schritte umfasst:
Bestimmen, ob die aktuelle Netzdienstqualität des ersten Endgeräts eine voreingestellte Anomalitätsbestimmungsbedingung erfüllt (S101) und Bestimmen, ob der Netzvermittlungsprozess anormal ist, wenn das erste Endgerät in dem Netzvermittlungsprozess ist (S102);
wenn bestimmt wird, dass die aktuelle Netzdienstqualität des ersten Endgeräts die Anomalitätsbestimmungsbedingung erfüllt, wird erfasst, dass der Netzzustand des ersten Endgeräts anormal ist; und
wenn bestimmt wird, dass der Netzvermittlungsprozess anormal ist, wird erfasst, dass der Netzzustand des ersten Endgeräts anormal ist.

4. Medienstromübermittlungsqualität-Benachrichtigungsverfahren nach Anspruch 3, wobei:
wenn bestimmt wird, dass die aktuelle Netzdienstqualität des ersten Endgeräts die Anomalitätsbestimmungsbedingung erfüllt, die von der Entität des Session Border Controllers, SBC, SBC, an das zweite Endgerät gesendete Benachrichtigungsinformationen Netzqualitätsanomalie-Benachrichtigungsinformationen umfassen; und
wenn bestimmt wird, dass der Netzvermittlungsprozess anormal ist, die von der Entität des Session Border Controllers, SBC, SBC, an das zweite Endgerät gesendeten Benachrichtigungsinformationen Netzvermittlungsanomalie-Benachrichtigungsinformationen umfassen.

5. Medienstromübermittlungsqualität-Benachrichtigungsverfahren nach einem der Ansprüche 1 bis 4, wobei die Benachrichtigungsinformationen ferner eine Quellenidentifikation umfassen.

6. Medienstromübermittlungsqualität-Benachrichtigungsverfahren nach einem der Ansprüche 3 bis 5, wobei ein Bestimmen, durch die Entität des Session Border Controllers, SBC, ob die aktuelle Netzdienstqualität des ersten Endgeräts die voreingestellte Anomalitätsbestimmungsbedingung erfüllt, folgende Schritte umfasst:
Empfangen von Medienstrompaketen des ersten Endgeräts und Einstellen eines Beobachtungsfensters, um mindestens einen von Parametern der aktuellen Netzdienstqualität des ersten Endgeräts zu erlangen (S1011);
Erfassen, ob ein Parameter der aktuellen Netzdienstqualität in einen entsprechenden voreingestellten Anomaliebereich fällt (S1012);
Bestimmen, dass die aktuelle Netzdienstqualität des ersten Endgeräts die voreingestellte Anomalitätsbestimmungsbedingung erfüllt, wenn erfasst wird, dass der Parameter der aktuellen Netzdienstqualität in den entsprechenden voreingestellten Anomaliebereich fällt.

7. Medienstromübermittlungsqualität-Benachrichtigungsverfahren nach Anspruch 6, wobei der mindestens eine der Parameter der aktuellen Netzdienstqualität mindestens eines von Paketverlustrate, Zeitverzögerung und Jitter umfasst.

8. Medienstromübermittlungsqualität-Benachrichtigungsverfahren nach einem der Ansprüche 3 bis 5, wobei ein Bestimmen, durch die Entität des Session Border Controllers, SBC, ob der Netzvermittlungsprozess anormal ist, wenn das erste Endgerät in dem Netzvermittlungsprozess ist, folgende Schritte umfasst:
Bestimmen, dass das erste Endgerät eine Netzvermittlung beginnt (S1021);
Erfassen, ob das erste Endgerät den Netzvermittlungsprozess innerhalb einer voreingestellten Zeitdauer abschließt (S1022); und
Bestimmen, dass der Netzvermittlungsprozess nicht normal ist, wenn erfasst wird, dass das erste Endgerät den Netzvermittlungsprozess nicht innerhalb der voreingestellten Zeitdauer abschließt.

9. Entität von Session Border Controller, **dadurch gekennzeichnet, dass** sie Folgendes umfasst:
einen oder mehrere Prozessoren; und
eine Speichervorrichtung, die zum Speichern eines oder mehrerer Programme konfiguriert ist,
wobei, wenn das eine oder die mehreren Programme durch den einen oder die mehreren Prozessoren ausgeführt werden, der eine oder die mehreren Prozessoren in die Lage versetzt werden, das Medienstromübermittlungsqualität-Benachrichtigungsverfahren nach einem der Ansprüche 1 bis 8 zu implementieren.

10. Computerlesbares Medium, auf dem ein Computerprogramm gespeichert ist, **dadurch gekennzeichnet, dass** das Programm, wenn es durch den Prozessor ausgeführt wird, Schritte des Medienstromübermittlungsqualität-Benachrichtigungsverfahrens nach einem der Ansprüche 1 bis 8 implementiert.

## Revendications

1. Procédé de notification de qualité de distribution de flux multimédia, **caractérisé en ce qu'**il comprend le fait de :
mettre en oeuvre, par le biais d'une entité contrôleur de limite de session, SBC, une détection, en vue de déterminer si un état de réseau d'un premier terminal est anormal, dans lequel l'état de réseau comprend au moins l'un des éléments parmi une qualité de service réseau actuelle et l'anormalité ou la normalité d'un processus de commutation de réseau (S1) ; et
envoyer, par le biais de l'entité contrôleur de limite de session, SBC, s'il est détecté que l'état de réseau du premier terminal est anormal, des informations de notification correspondant à un rapport de qualité de distribution de flux multimédia du premier terminal, à un deuxième terminal, le deuxième terminal étant un terminal de communication à l'opposée du premier terminal (S2).

2. Procédé de notification de qualité de distribution de flux multimédia selon la revendication 1, dans lequel, lorsqu'il est détecté, par l'entité contrôleur de limite de session, SBC, que l'état de réseau du premier terminal est anormal, le procédé comprend en outre le fait de :
envoyer, par le biais de l'entité contrôleur de limite de session, SBC, une instruction d'ajustement de vitesse de transmission, au deuxième terminal (S3).

3. Procédé de notification de qualité de distribution de flux multimédia selon la revendication 1 ou 2, dans lequel la mise en oeuvre, par l'entité contrôleur de limite de session, SBC, d'une détection en vue de déterminer si l'état de réseau du premier terminal est anormal, comprend des étapes comprenant le fait de :
déterminer si la qualité de service réseau actuelle du premier terminal répond à une condition de détermination d'anormalité prédéfinie (S101) et déterminer si le processus de commutation de réseau est anormal, lorsque le premier terminal est dans le processus de commutation de réseau (S102) ;
lorsqu'il est déterminé que la qualité de service réseau actuelle du premier terminal répond à la condition de détermination d'anormalité, il est détecté que l'état de réseau du premier terminal est anormal ; et
lorsqu'il est déterminé que le processus de commutation de réseau est anormal, il est détecté que l'état de réseau du premier terminal est anormal.

4. Procédé de notification de qualité de distribution de flux multimédia selon la revendication 3, dans lequel :
lorsqu'il est déterminé que la qualité de service réseau actuelle du premier terminal répond à la condition de détermination d'anormalité, les informations de notification envoyées par l'entité contrôleur de limite de session, SBC, au deuxième terminal, comprennent des informations de notification d'anormalité de qualité de réseau ; et
lorsqu'il est déterminé que le processus de commutation de réseau est anormal, les informations de notification envoyées par l'entité contrôleur de limite de session, SBC, au deuxième terminal, comprennent des informations de notification d'anormalité de commutation de réseau.

5. Procédé de notification de qualité de distribution de flux multimédia selon l'une quelconque des revendications 1 à 4, dans lequel les informations de notification comprennent en outre une identification de source.

6. Procédé de notification de qualité de distribution de flux multimédia selon l'une quelconque des revendications 3 à 5, dans lequel le fait de déterminer, par le biais de l'entité contrôleur de limite de session, SBC, si la qualité de service réseau actuelle du premier terminal répond à la condition de détermination d'anormalité prédéfinie, comprend des étapes comprenant le fait de :
recevoir des paquets de flux multimédia du premier terminal et définir une fenêtre d'observation, de manière à obtenir au moins un des paramètres de la qualité de service réseau actuelle du premier terminal (S1011) ;
détecter si un paramètre de la qualité de service réseau actuelle se situe dans une plage d'anormalité prédéfinie correspondante (S1012) ;
déterminer que la qualité de service réseau actuelle du premier terminal répond à la condition de détermination d'anormalité prédéfinie lorsqu'il est détecté que le paramètre de la qualité de service réseau actuelle se situe dans la plage d'anormalité prédéfinie correspondante.

7. Procédé de notification de qualité de distribution de flux multimédia selon la revendication 6, dans lequel ledit au moins un des paramètres de la qualité de service réseau actuelle comprend au moins l'un parmi un taux de perte de paquets, un retard temporel et une gigue.

8. Procédé de notification de qualité de distribution de flux multimédia selon l'une quelconque des revendications 3 à 5, dans lequel le fait de déterminer, par le biais de l'entité contrôleur de limite de session, SBC, si le processus de commutation de réseau est anormal, lorsque le premier terminal est dans le processus de commutation de réseau, comprend des étapes comprenant le fait de :
déterminer que le premier terminal commence une commutation de réseau (S1021) ;
détecter si le premier terminal achève le processus de commutation de réseau au cours d'une durée prédéfinie (S1022) ; et
déterminer que le processus de commutation de réseau est anormal lorsqu'il est détecté que le premier terminal n'achève pas le processus de commutation de réseau au cours de la durée prédéfinie.

9. Entité contrôleur de limite de session, **caractérisée en ce qu'**elle comprend :
un ou plusieurs processeurs ; et
un dispositif de stockage, qui est configuré de manière à stocker un ou plusieurs programmes ;
dans laquelle, lorsque ledit un ou lesdits plusieurs programmes sont exécutés par ledit un ou lesdits plusieurs processeurs, ledit un ou lesdits plusieurs processeurs sont aptes à mettre en oeuvre le procédé de notification de qualité de distribution de flux multimédia selon l'une quelconque des revendications 1 à 8.

10. Support lisible par ordinateur, sur lequel est stocké un programme informatique, **caractérisé en ce que** le programme, lorsqu'il est exécuté par le processeur, met en oeuvre les étapes du procédé de notification de qualité de distribution de flux multimédia selon l'une quelconque des revendications 1 à 8.
